# EUROPÄISCHE PATENTSCHRIFT

(11) **EP 3 295 066 B1**
(45) Veröffentlichungstag und Bekanntmachung des Hinweises auf die Patenterteilung: **31.10.2018**
(21) Anmeldenummer: 15763628.3
(22) Anmeldetag: 18.09.2015
(51) Int. Cl.: F16K 31/524

(54) **ROLLENHEBEL-BETÄTIGUNGSEINRICHTUNG UND DAMIT AUSGESTATTETES ROLLENHEBELVENTIL**
ROLLER LEVER ACTUATING DEVICE AND ROLLER LEVER VALVE EQUIPPED THEREWITH
DISPOSITIF D'ACTIONNEMENT À LEVIER À GALET ET SOUPAPE À LEVIER À GALET ÉQUIPÉE DE CE DISPOSITIF

(43) Veröffentlichungstag der Anmeldung: 21.03.2018
(73) Patentinhaber: Festo AG & Co. KG, 73734 Esslingen (DE)
(72) Erfinder: STERNS, Frank, 71034 Böblingen (DE); PAECH, Stephan, 73732 Esslingen (DE)
(74) Vertreter: Patentanwälte Magenbauer & Kollegen Partnerschaft mbB
(86) Internationale Anmeldenummer: PCT/EP2015/071428
(87) Internationale Veröffentlichungsnummer: WO 2017/045724

(56) Entgegenhaltungen:
- CN-Y- 2 216 611
- DE-U- 1 721 502
- DE-U1- 8 436 606
- GB-A- 951 634

## Beschreibung

Die Erfindung betrifft eine Rollenhebel-Betätigungseinrichtung für Rollenhebelventile, mit einem zur Fixierung an einer Ventileinheit eines Rollenhebelventils dienenden Lagersockel und einem an dem Lagersockel bezüglich einer Schwenkachse verschwenkbar gelagerten, eine Antriebsrolle aufweisenden Rollenhebel, wobei der Rollenhebel im Rahmen einer Vorwärts-Schwenkbewegung aus einer Grundstellung in eine Betätigungsstellung und im Rahmen einer Rückwärts-Schwenkbewegung aus der Betätigungsstellung zurück in die Grundstellung verschwenkbar ist, wobei der Rollenhebel mindestens einen zu der Schwenkachse beabstandeten Kraftabgabeabschnitt aufweist, der vorgesehen ist, um bei der Vorwärts-Schwenkbewegung drückend auf einen einer zu betätigenden Ventilgliedanordnung eines Rollenhebelventils zugeordneten Betätigungsabschnitt einzuwirken. Die Erfindung betrifft ferner ein mit einer solchen Rollenhebel-Betätigungseinrichtung ausgestattetes Rollenhebelventil.

Eine in dem vorgenannten Sinne ausgebildete Rollenhebel-Betätigungseinrichtung einschließlich eines damit ausgestatteten Rollenhebelventils ist aus der DE 1 721 502 U bekannt. In diesem bekannten Fall verfügt eine Rollenhebel-Betätigungseinrichtung über einen einstückig mit dem Ventilgehäuse einer Ventileinheit eines Rollenhebelventils ausgebildeten Lagersockel und einen an dem Lagersockel verschwenkbar gelagerten Rollenhebel. Der Rollenhebel wirkt mit einem beweglichen Betätigungsabschnitt zusammen, der Bestandteil einer im Ventilgehäuse bewegbar angeordneten Ventilgliedeinrichtung ist. Eine an dem Rollenhebel drehbar gelagerte Antriebsrolle kann durch ein beispielsweise nockenförmig ausgebildetes Betätigungsglied beaufschlagt werden, sodass der Rollenhebel aus einer unverschwenkten Grundstellung in eine verschwenkte Betätigungsstellung verschwenkt wird. Bei der dabei stattfindenden Vorwärts-Schwenkbewegung drückt der Rollenhebel auf den Betätigungsabschnitt und schaltet die Ventilgliedanordnung um. Sobald das Betätigungsglied außer Eingriff mit der Antriebsrolle steht, führt der Rollenhebel eine durch eine Feder unterstützte Rückwärts-Schwenkbewegung aus, bei der er aus der verschwenkten Betätigungsstellung in die unverschwenkte Grundstellung zurückkehrt. Die Grundstellung ist dadurch vorgegeben, dass der Rollenhebel mit einem an ihm angebrachten Anschlagstift auf eine in einer Bohrung des Lagersockels ausgebildete Gegenanschlagfläche aufprallt. Da der Anschlagstift seitlich vom Rollenhebel wegragt, unterliegt er beim Aufprall auf die Gegenanschlagfläche einer hohen Biegebelastung, sodass er Beschädigungen davontragen kann.

Bei einem aus der DE 84 36 606 U1 bekannten Rollenhebelventil ist ein Lagersockel einer Rollenhebel-Betätigungseinrichtung als separate Komponente an der Ventileinheit des Rollenhebelventils angebracht, wobei der mit der Antriebsrolle ausgestattete Rollenhebel unter gleichzeitiger Definition einer Schwenkachse mit dem Lagersockel verrastet ist.

Der Erfindung liegt die Aufgabe zugrunde, Maßnahmen zu treffen, um die Beschädigungsgefahr für den schwenkbeweglichen Rollenhebel einer Rollenhebel-Betätigungseinrichtung zu verringern.

Zur Lösung dieser Aufgabe ist in Verbindung mit den eingangs genannten Merkmalen vorgesehen, dass die Rollenhebel-Betätigungseinrichtung eine mit Energieabsorptionsmitteln ausgestattete Energieabsorptionseinrichtung aufweist, durch die der die Rückwärts-Schwenkbewegung ausführende Rollenhebel bei Annäherung an seine Grundstellung entlang eines Bremsweges abgebremst wird.

Die Aufgabe wird ferner durch ein Rollenhebelventil gelöst, das mit einer derartigen Rollenhebel-Betätigungseinrichtung ausgestattet ist.

Auf diese Weise wird bei der Rückwärts-Schwenkbewegung des Rollenhebels schon vor dessen Erreichen der Grundstellung ein Teil der Bewegungsenergie absorbiert. Somit reduziert sich die strukturelle Belastung der Rollenhebel-Betätigungseinrichtung, wenn der Rollenhebel aus der Betätigungsstellung in die Grundstellung zurückschwenkt. Die dabei stattfindende Rückwärts-Schwenkbewegung des Rollenhebels ist in der Regel mit einer hohen Bewegungsenergie verbunden, weil der Rollenhebel durch die zuvor ausgelenkte Ventilgliedanordnung in die Grundstellung zurückgedrängt wird. Die Energieabsorptionsmittel der Energieabsorptionseinrichtung sorgen für eine Verlangsamung der Rückwärts-Schwenkbewegung während eines der Grundstellung vorausgehenden Bremsweges, sodass die bei Erreichen der Grundstellung noch vorhandene Bewegungsenergie des Rollenhebels relativ gering oder vollständig absorbiert ist und folglich die Beschädigungsgefahr für die Komponenten der Rollenhebel-Betätigungseinrichtung minimiert ist. Die Energieabsorptionsmittel können unmittelbar selbst einen Endanschlag zur Vorgabe der Grundstellung bilden. Es ist aber auch möglich, zusätzlich einen bezüglich des Lagersockels ortsfesten Endanschlag unabhängig von der Energieabsorptionseinrichtung zur Vorgabe der Grundstellung vorzusehen.

Vorteilhafte Weiterbildungen der Erfindung gehen aus den Unteransprüchen hervor.

Die Energieabsorptionsmittel der Energieabsorptionseinrichtung sind zweckmäßigerweise an dem Lagersockel angeordnet. Dementsprechend müssen die Energieabsorptionsmittel die Schwenkbewegung des Rollenhebelventils nicht mitmachen und sie führen nicht zu einer Vergrößerung der bewegten und abzubremsenden Masse. Folglich ist eine effektive Endlagendämpfung mit kompakten Abmessungen der Energieabsorptionseinrichtung möglich.

Die Energieabsorptionsmittel verfügen zweckmäßigerweise über einen zur Energieabsorption beweglichen Krafteinleitungsabschnitt, der so im Schwenkweg des Rollenhebels angeordnet ist, dass in der Betätigungsstellung des Rollenhebels zwischen diesem und dem Krafteinleitungsabschnitt ein Abstand vorhanden ist. Der Krafteinleitungsabschnitt macht dann nicht die gesamte Schwenkbewegung des Rollenhebels mit, sondern ist nur während des letzten Abschnittes der Schwenkbewegung des Rollenhebels mit dem Rollenhebel bewegungsgekoppelt, sodass dieser letzte Abschnitt der Schwenkbewegung den Bremsweg definiert, entlang dem die Geschwindigkeit des Rollenhebels reduziert wird. Wie sich gezeigt hat, reicht bei entsprechender Steifigkeit der Energieabsorptionsmittel ein Bremsweg von beispielsweise maximal 1 mm aus, um die Bewegungsenergie auf ein strukturverträgliches Maß zu reduzieren.

Bei dem Krafteinleitungsabschnitt der Energieabsorptionsmittel handelt es sich vorzugsweise um einen freien Endabschnitt dieser Energieabsorptionsmittel.

Die Energieabsorptionsmittel können von einem Stoßdämpfer gebildet sein. Als besonders kostengünstig und dennoch effektiv hat sich allerdings eine Bauform herausgestellt, bei der Federmittel zur Bildung der Energieabsorptionsmittel vorhanden sind. Insbesondere wenn der Bremsweg zur Absorption der unerwünscht hohen Bewegungsenergie relativ kurz ist, kann mit Federmitteln aufgrund ihrer Elastizität eine wirksame Dämpfung ohne störenden Rückprall des Rollenhebels gewährleistet werden.

Von Federmitteln gebildete Energieabsorptionsmittel enthalten bevorzugt mindestens eine und zweckmäßigerweise genau eine Blattfeder. Diese Blattfeder erstreckt sich zweckmäßigerweise in der Schwenkebene des Rollenhebels, in der die Vorwärts-Schwenkbewegung und die Rückwärts-Schwenkbewegung stattfinden. Die mindestens eine Blattfeder besteht insbesondere aus Metall und bevorzugt aus Stahl. Eine besonders vorteilhafte Ausführungsform sieht eine einstückige Ausbildung der Blattfeder mit dem Lagersockel vor. Auf diese Weise sind die Energieabsorptionsmittel quasi in den Lagersockel integriert, der folglich kompakt und kostengünstig herstellbar ist. Der gesamte Lagersockel kann beispielsweise als ein einstückiges Blechbiegeteil ausgeführt sein.

Als besonders zweckmäßig hat es sich erwiesen, die Blattfeder mit einem gebogenen Längsverlauf zu versehen und die Blattfeder so anzuordnen, dass sie einen mit dem Lagersockel verbundenen ersten Endabschnitt und einen diesbezüglich entgegengesetzten, mit dem Rollenhebel zusammenwirkenden zweiten Endabschnitt aufweist. Der zweite Endabschnitt fungiert bevorzugt als der bewegliche Krafteinleitungsabschnitt, der weiter oben schon beschrieben wurde.

Eine über einen bogenförmigen Längsverlauf verfügende Blattfeder hat den Vorteil, dass auf engstem Raum eine große Federlänge verwirklicht werden kann. Eine große Federlänge ermöglicht die Verwendung einer relativ steifen Blattfeder, die mithin beim Aufprall des Rollenhebels nur wenig ausgelenkt wird. Die geringe Auslenkung wiederum reduziert die inneren Spannungen der Blattfeder und folglich die Beanspruchung der Blattfeder, was der Lebensdauer zugute kommt. Man wird bestrebt sein, einen relativ großen Bogenradius für den gebogenen Längsverlauf vorzusehen, da auch dies die internen Spannungen der Blattfeder minimiert und die Dauerfestigkeit verbessert.

Der Rollenhebel ist zweckmäßigerweise mit einem Lagerabschnitt schwenkbeweglich am Lagersockel gelagert. Der Lagerabschnitt ist bevorzugt einem Endbereich des Rollenhebels zugeordnet. Die gebogene Blattfeder erstreckt sich dabei um den Lagerabschnitt und die Schwenkachse herum, sodass sie zweckmäßigerweise einen unterhalb des Rollenhebels liegenden axialen Endabschnitt und einen oberhalb des Rollenhebels über den Rollenhebel ragenden axialen Endabschnitt aufweist. Der oberhalb des Rollenhebels liegende axiale Endabschnitt der Blattfeder bildet dabei den schon erwähnten Krafteinleitungsabschnitt. Der Krafteinleitungsabschnitt ist bevorzugt U-förmig umgebogen, sodass er mit einem konvex gekrümmten Bereich am Rollenhebel anliegt und die während des Bremsweges stattfindenden Relativbewegungen zwischen dem Rollenhebel und dem Krafteinleitungsabschnitt keinen nennenswerten Verschleiß verursachen.

Der Lagersockel weist zweckmäßigerweise einen sich unterhalb des Rollenhebels erstreckenden starren Basisabschnitt auf, von dem nach oben hin wenigstens ein und bevorzugt zwei zueinander beabstandete Lagerschenkel wegragen. An dem oder den Lagerschenkel(n) ist der Rollenhebel mit seinem Lagerabschnitt verschwenkbar gelagert, insbesondere mittels eines zylindrischen Achsbolzens. Mit dem einen ihrer beiden axialen Endabschnitte ist die Blattfeder an dem Basisabschnitt befestigt, insbesondere durch eine einstückige Ausbildung mit dem Basisabschnitt.

Der Rollenhebel trägt eine drehbare Antriebsrolle, die vorgesehen ist, um durch ein sich bewegendes externes Betätigungsglied beaufschlagt zu werden und dadurch die Vorwärts-Schwenkbewegung des Rollenhebels hervorzurufen. Bei dem Betätigungsglied handelt es sich vorzugsweise um einen Betätigungsnocken. Das Betätigungsglied ist insbesondere mit einem Maschinenteil bewegungsgekoppelt und ruft abhängig von der Bewegung dieses Maschinenteils eine Betätigung des Rollenhebelventils hervor.

Der Rollenhebel kann einteilig ausgeführt sein und über einen mittels Schwenklagermitteln an dem Lagersockel verschwenkbar gelagerten Schwenkarm verfügen, der unmittelbar die bevorzugt drehbare Antriebsrolle trägt. Bei einer alternativen Ausführungsform ist der Rollenhebel zweiarmig ausgeführt und verfügt zusätzlich zu dem Schwenkarm über einen Kipparm, der an dem Schwenkarm verschwenkbar gelagert ist und durch Federmittel in eine Ausgangsstellung bezüglich des Schwenkarmes vorgespannt ist. Der schwenkbewegliche Kipparm verhindert eine unerwünschte Betätigung des Rollenhebels, wenn ein zunächst über die Antriebsrolle hinweggefahrenes Betätigungsglied wieder in seine Ausgangsstellung zurückfährt.

Ein mit der Rollenhebel-Betätigungseinrichtung ausgestattetes Rollenhebelventil verfügt zweckmäßigerweise über eine Ventileinheit mit einem Ventilgehäuse und einer in dem Ventilgehäuse zwischen verschiedenen Schaltstellungen umschaltbar aufgenommenen Ventilgliedanordnung. Die Ventilgliedanordnung kann über ein oder mehrere Ventilglieder verfügen. Die Rollenhebel-Betätigungseinrichtung ist mit ihrem Lagersockel außen an dem Ventilgehäuse angeordnet, insbesondere an einer axialen Stirnseite des Ventilgehäuses. Dort ragt in einem Arbeitsbereich ein Betätigungsabschnitt der Ventileinheit aus dem Ventilgehäuse heraus, der antriebsmäßig mit der Ventilgliedanordnung gekoppelt ist oder unmittelbar ein Bestandteil der Ventilgliedanordnung ist. Bei der Vorwärts-Schwenkbewegung des Rollenhebels wird die Ventilgliedanordnung aus einer ersten Schaltstellung in eine zweite Schaltstellung umgeschaltet. Bei der entgegengesetzten Rückwärts-Schwenkbewegung des Rollenhebels kehrt die Ventilgliedanordnung aus der zweiten Schaltstellung in die erste Schaltstellung zurück. Bevorzugt ist die Ventilgliedanordnung federnd in die erste Schaltstellung vorgespannt, sodass sie über den Betätigungsabschnitt eine Rückstellkraft auf den Rollenhebel ausübt, um diesen in die Grundstellung zurückzuschwenken. Indem der Rollenhebel auf dem letzten Abschnitt der Rückwärts-Schwenkbewegung verlangsamt wird, wirkt sich die damit verbundene Dämpfungswirkung auch auf die Ventilgliedanordnung aus, die folglich ebenfalls einer nur geringen Belastung ausgesetzt ist. Dies gilt vor allem für eine Bauform des Rollenhebelventils als Sitzventil. Selbstverständlich kann das Rollenhebelventil auch als ein Kolbenschieberventil ausgeführt sein.

Nachfolgend wird die Erfindung anhand der beiliegenden Zeichnung näher erläutert. In dieser zeigen:
- Figur 1: eine bevorzugte Ausführungsform eines erfindungsgemäßen Rollenhebelventils, das mit einer vorteilhaften Ausführungsform der erfindungsgemäßen Rollenhebel-Betätigungseinrichtung ausgestattet ist, wobei eine perspektivische Ansicht gezeigt ist, in der sich der Rollenhebel in der unverschwenkten Grundstellung befindet,
- Figur 2: die Anordnung aus Figur 1 in einem Längsschnitt gemäß Schnittlinie II-II, wobei ergänzend ein mit der Antriebsrolle kooperierendes externes Betätigungsglied angedeutet ist,
- Figur 3: den gleichen Längsschnitt wie in Figur 2, allerdings in einer Schrägansicht,
- Figur 4: das Rollenhebelventil aus Figur 1 in der verschwenkten Betätigungsstellung des Rollenhebels,
- Figur 5: einen Längsschnitt durch das Rollenhebelventil der Figur 4 gemäß Schnittlinie V-V aus Figur 4, wobei wiederum ein mit der Antriebsrolle kooperierendes externes Betätigungsglied angedeutet ist, und
- Figur 6: den gleichen Längsschnitt wie in Figur 5, allerdings in einer Schrägansicht.

Das aus der Zeichnung ersichtliche Rollenhebelventil 1 verfügt über eine Ventileinheit 2 und eine zur mechanischen Betätigung der Ventileinheit 2 dienende Rollenhebel-Betätigungseinrichtung 3.

Die Ventileinheit 2 hat eine Längsachse 4. Die Rollenhebel-Betätigungseinrichtung 3 ist bevorzugt an einer der beiden axialen Stirnseiten der Ventileinheit 2 angeordnet.

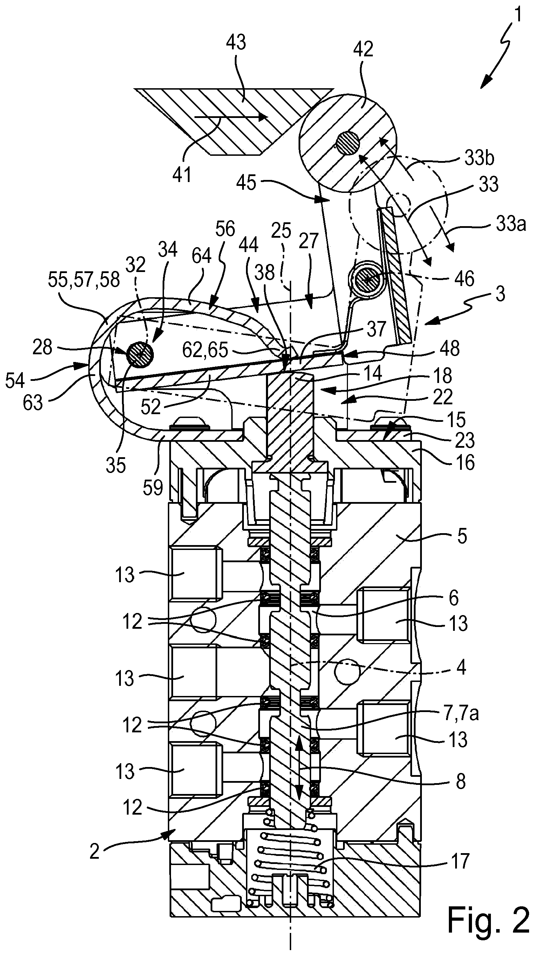

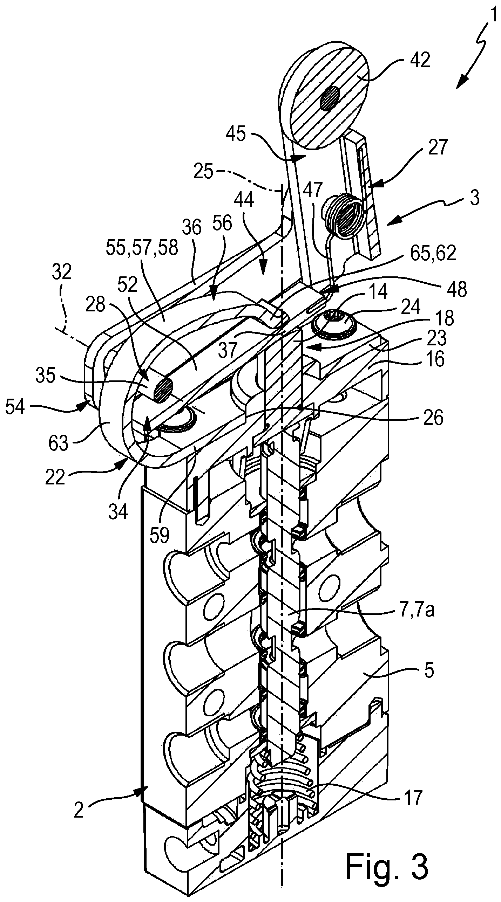

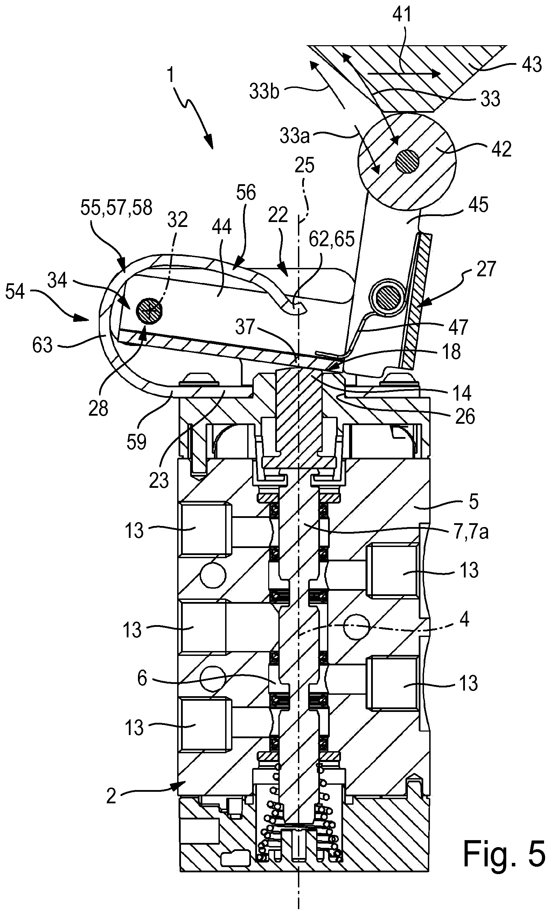

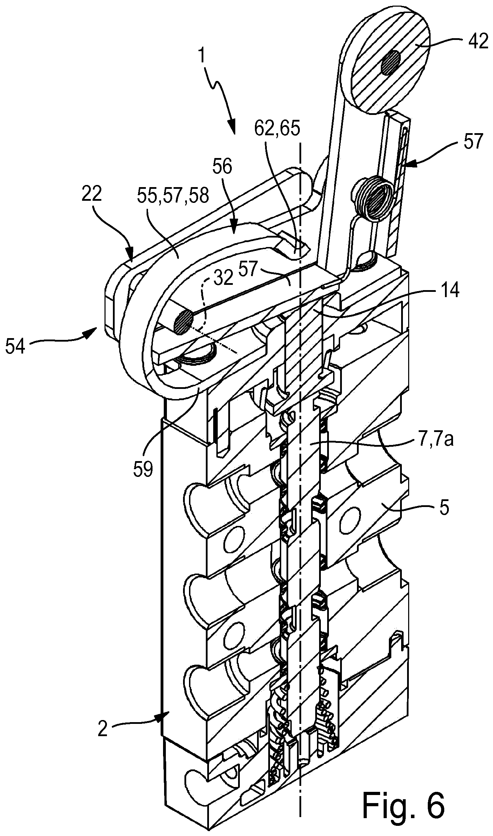

Die Ventileinheit 2 hat ein ein- oder mehrteiliges Ventilgehäuse 5, in dem eine Ventilkammer 6 ausgebildet ist, in der sich eine Ventilgliedanordnung 7 erstreckt. Die Ventilgliedanordnung 7 besteht beim Ausführungsbeispiel aus einem einzigen Ventilglied 7a, kann aber auch mehrere Ventilglieder umfassen. Im Rahmen einer durch einen Doppelpfeil angedeuteten Umschaltbewegung 8 kann die Ventilgliedanordnung 7 relativ zum Ventilgehäuse 5 in Achsrichtung der Längsachse 4 bewegt und dadurch zwischen zwei Schaltstellungen umgeschaltet werden. In den Figuren 2 und 3 ist die erste Schaltstellung, in den Figuren 5 und 6 die zweite Schaltstellung der Ventilgliedanordnung 7 illustriert.

Die Ventilgliedanordnung 7 kooperiert mit ortsfest am Ventilgehäuse 5 angeordneten ringförmigen Dichtflächen 12, die bevorzugt koaxial zu der Ventilgliedanordnung 7 ausgerichtet sind. Die Dichtflächen 12 sind in Achsrichtung der Längsachse 4 mit Abstand zueinander angeordnet und begrenzen ebenfalls axial aufeinanderfolgend angeordnete Längenabschnitte der Ventilkammer 6, die jeweils mit einem das Ventilgehäuse 5 durchsetzenden Ventilkanal 13 kommunizieren. Die Ventilkanäle 13 münden zur Außenseite des Ventilgehäuses 5 aus und ermöglichen in an sich bekannter Weise das Anschließen einer Druckquelle, insbesondere einer Druckluftquelle, das Anschließen mindestens eines zu betätigenden Verbrauchers und die Verbindung zu einer Drucksenke, insbesondere zur Atmosphäre.

In den beiden Schaltstellungen kooperiert die Ventilgliedanordnung 7 in unterschiedlicher Weise mit den Dichtflächen 12, sodass die Ventilkanäle 13 in unterschiedlichem Muster miteinander verbunden und voneinander abgetrennt werden. Auf diese Weise kann beispielsweise die Hin- und Herbewegung des Abtriebsteils eines den Verbraucher bildenden fluidbetätigten Antriebes hervorgerufen werden.

Beim Ausführungsbeispiel sind die Dichtflächen 12 radial orientiert und konzentrisch um die Ventilgliedanordnung 7 herum angeordnet. Es findet also ein radialer Dichtkontakt zwischen der Ventilgliedanordnung 7 und den Dichtflächen 12 statt. Die Ventileinheit 2 ist hierbei ein Kolbenschieberventil, das mit einem als Kolbenschieber ausgebildeten Ventilglied 7a ausgestattet ist.

Bei einem nicht gezeigten Ausführungsbeispiel ist die Ventileinheit 2 ein Sitzventil, dessen Dichtflächen 12 axial orientiert sind und mit axial orientierten Verschlussabschnitten der Ventilgliedanordnung 7 zusammenwirken können.

Die Umschaltbewegung 8 ist durch mechanische Beaufschlagung eines der Ventilgliedanordnung 7 zugeordneten, relativ zum Ventilgehäuse 5 beweglichen Betätigungsabschnittes 14 hervorrufbar. Der Betätigungsabschnitt 14 ist beim Ausführungsbeispiel eine bezüglich der Ventilgliedanordnung 7 separate Komponente und der Ventilgliedanordnung 7 derart axial vorgelagert, dass er in der Lage ist, eine drückende Kraft auf die Ventilgliedanordnung 7 zu übertragen. Bei einem nicht gezeigten Ausführungsbeispiel ist der Betätigungsabschnitt 14 unmittelbar ein Bestandteil der Ventilgliedanordnung 7 und insbesondere ein einstückiger Bestandteil eines Ventilgliedes der Ventilgliedanordnung 7.

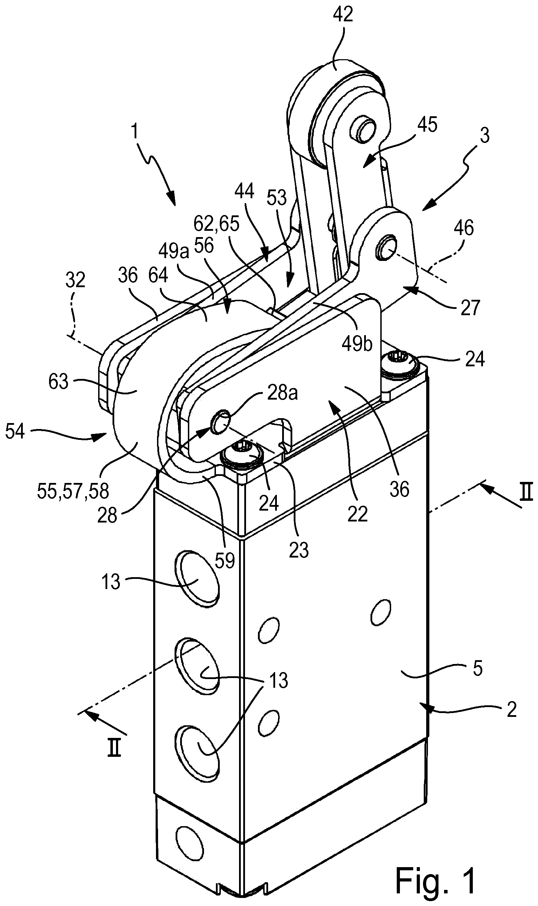

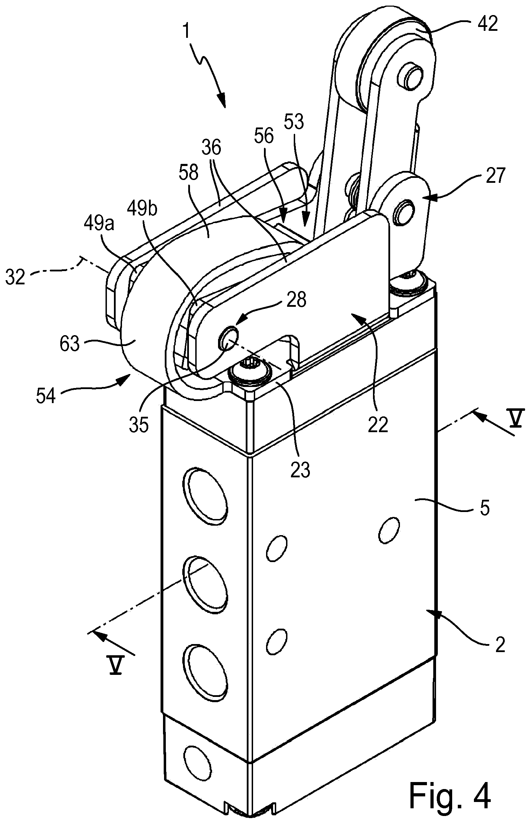

An der die Rollenhebel-Betätigungseinrichtung 3 aufweisenden axialen Stirnseite der Ventileinheit 2 verfügt das Ventilgehäuse 5 über eine axiale Stirnfläche 15, die im Folgenden zur besseren Unterscheidung auch als erste axiale Stirnfläche 15 bezeichnet sei. Die erste axiale Stirnfläche 15 befindet sich an einer als erste axiale Stirnwand 16 bezeichneten stirnseitigen Abschlusswand des Ventilgehäuses 5, die axial gleitverschieblich von dem Betätigungsabschnitt 14 durchsetzt ist. Der Betätigungsabschnitt 14 ragt über die erste axiale Stirnfläche 15 vor, wobei er in der aus Figuren 1 bis 3 ersichtlichen ersten Schaltstellung der Ventilgliedanordnung 7 weiter aus dem Ventilgehäuse 5 herausragt als in der aus Figuren 4 bis 6 ersichtlichen zweiten Schaltstellung der Ventilgliedanordnung 7.

Zweckmäßigerweise ist die Ventilgliedanordnung 7 und folglich auch der Betätigungsabschnitt 14 durch eine Rückstellfedereinrichtung 17 der Ventileinheit 2 in die erste Schaltstellung vorgespannt. Die Rückstellfedereinrichtung 17 stützt sich im Innern des Ventilgehäuses 5 einerseits an dem Ventilgehäuse 5 und andererseits an der Ventilgliedanordnung 7 ab. Sie kann zusätzlich oder alternativ auch direkt auf den Betätigungsabschnitt 14 einwirken.

Die Umschaltbewegung 8 der Ventilgliedanordnung 7 ist durch mechanisches Zusammenwirken der Rollenhebel-Betätigungseinrichtung 3 mit dem Betätigungsabschnitt 14 hervorrufbar. In dem in Figuren 1 bis 3 ersichtlichen unbetätigten Zustand der Rollenhebel-Betätigungseinrichtung 3 nimmt die Ventilgliedanordnung 7 die erste Schaltstellung ein, bei der es sich folglich um eine durch die Rückstellfedereinrichtung 17 vorgegebene Grundstellung der Ventilgliedanordnung 7 handelt.

Die Rollenhebel-Betätigungseinrichtung 3 kooperiert mit dem Betätigungsabschnitt 14 in einem außerhalb des Ventilgehäuses 5 liegenden, exemplarisch der ersten axialen Stirnfläche 15 vorgelagerten Arbeitsbereich 18.

Die Rollenhebel-Betätigungseinrichtung 3 besitzt einen Lagersockel 22, über den sie an der Ventileinheit 2 fixiert ist. Der Lagersockel 22 kann einstückig mit dem Ventilgehäuse 5 ausgebildet sein, ist jedoch vorzugsweise eine bezüglich des Ventilgehäuses 5 separate Komponente. Letzteres trifft auf das Ausführungsbeispiel zu, bei dem der Lagersockel 22 an die erste axiale Stirnfläche 15 des Ventilgehäuses 5 angesetzt und mit Hilfe von Befestigungsschrauben 24 an das Ventilgehäuse 5 angeschraubt ist.

Zweckmäßigerweise ist der Lagersockel 22 über einen starren Basisabschnitt 23 am Ventilgehäuse 5 angebracht. Der starre Basisabschnitt 23 ist bevorzugt plattenförmig ausgebildet und liegt an der ersten Stirnfläche 15 an. Die Befestigungsschrauben 24 durchsetzen den starren Basisabschnitt 23 und sind in Gewindebohrungen des Ventilgehäuses 5 eingeschraubt.

Die Rollenhebel-Betätigungseinrichtung 3 hat eine Hochachse 25, die insbesondere rechtwinkelig zur Ausdehnungsebene des starren Basisabschnittes 23 verläuft. Sie hat exemplarisch die gleiche Ausrichtung wie die Längsachse 4 der Ventileinheit 2.

Der Arbeitsbereich 18 ist dem starren Basisabschnitt 23 an der dem Ventilgehäuse 5 entgegengesetzten Oberseite vorgelagert. Der Basisabschnitt 23 hat eine Durchbrechung 26, durch die der Betätigungsabschnitt 14 hindurchtreten kann.

Im Folgenden sei die von der Ventileinheit 2 in Achsrichtung der Hochachse 25 wegweisende Seite der Rollenhebel-Betätigungseinrichtung 3 als Oberseite und die der Ventileinheit 2 zugewandte Seite als Unterseite bezeichnet.

Die Rollenhebel-Betätigungseinrichtung 3 weist zusätzlich zu dem Lagersockel 22 einen an dem Lagersockel 22 verschwenkbar gelagerten Rollenhebel 27 auf. Zwischen dem Rollenhebel 27 und dem Lagersockel 22 wirksame Schwenklagermittel 28 definieren eine Schwenkachse 32, um die der Rollenhebel 27 unter Ausführung einer durch einen Doppelpfeil angedeuteten Rollenhebel-Schwenkbewegung 33 im Uhrzeigersinn und entgegen dem Uhrzeigersinn relativ zum Lagersockel 22 verschwenkbar ist. Die Schwenkachse 32 verläuft in einer zu der Hochachse 25 rechtwinkeligen Ebene. Die Schwenkebene des Rollenhebels 27 verläuft parallel zu der Hochachse 25 und liegt in den Figuren 2 und 5 in der Zeichenebene.

Der Rollenhebel 27 hat einen als Lagerabschnitt 34 bezeichneten Endabschnitt, der über die Schwenklagermittel 28 unter Definition der Schwenkachse 32 schwenkbeweglich mit dem Lagersockel 22 gekoppelt ist. Beim Ausführungsbeispiel enthalten die Schwenklagermittel 28 einen Achsbolzen 35, der sowohl den Lagerabschnitt 34 als auch den Lagersockel 22 durchsetzt. Beispielsweise ist der Achsbolzen 35 an dem Lagerabschnitt 34 fixiert und der Rollenhebel 27 ist im Bereich seines Lagerabschnittes 34 bezüglich des Achsbolzens 35 drehbar.

Die lagersockelseitigen Bestandteile der Schwenklagermittel 28 befinden sich zweckmäßigerweise an zwei von dem Basisabschnitt 23 nach oben ragenden, bevorzugt plattenförmig ausgebildeten Lagerschenkeln 36 des Lagersockels 22. Die beiden Lagerschenkel 36 sind in Achsrichtung der Schwenkachse 32 mit Abstand zueinander angeordnet und bevorzugt einstückig an einander entgegengesetzten Randbereichen des Basisabschnittes 23 angeformt. Exemplarisch bestehen die lagersockelseitigen Bestandteile der Schwenklagermittel 28 aus in Achsrichtung der Schwenkachse 32 miteinander fluchtenden Lagerlöchern 28a der Lagerschenkel 36, in die der Achsbolzen 35 mit seinen beiden einander entgegengesetzten Endabschnitten eingreift. Der Achsbolzen 35 durchquert dabei den zwischen den beiden Lagerschenkeln 36 befindlichen Zwischenraum.

Der Rollenhebel 27 ragt zumindest mit seinem den Lagerabschnitt 34 aufweisenden Abschnitt in den zwischen den beiden Lagerschenkeln 36 befindlichen Zwischenraum des Lagersockels 22 hinein. Er ist schmäler als der lichte Abstand zwischen den beiden Lagerschenkeln 36, sodass er den für die Schwenkbarkeit erforderlichen Bewegungsspielraum hat.

Die Schwenkachse 32 ist quer zu der Hochachse 25 mit Abstand zu dem Arbeitsbereich 18 angeordnet. Somit erstreckt sich der Rollenhebel 27 ausgehend von der Schwenkachse 32 quer zur Hochachse 25 über den Arbeitsbereich 18 und den in den Arbeitsbereich 18 hineinragenden Betätigungsabschnitt 14 hinweg. Mindestens ein mit Abstand zu der Schwenkachse 32 angeordneter Kraftabgabeabschnitt 37 des Rollenhebels 27 ist dabei einer vom Ventilgehäuse 5 weg nach oben weisenden Stirnfläche 38 des Betätigungsabschnittes 14 vorgelagert und liegt an der Stirnfläche 38 des Betätigungsabschnittes 14 gleitverschieblich an. An einer zu der Schwenkachse 32 beabstandeten Stelle weist der Rollenhebel 27 eine drehbare Antriebsrolle 42 auf, die zum Zusammenwirken mit einem externen Betätigungsglied 43 vorgesehen ist. Im Betrieb ist das Rollenhebelventil 1 so platziert, dass die Antriebsrolle 42 im Verfahrweg des externen Betätigungsgliedes 43 liegt, das beispielsweise zu einer Maschine gehört. Das Betätigungsglied 43 kann im Rahmen einer Steuerbewegung 41 auf die Antriebsrolle 42 einwirken und dadurch die Rollenhebel-Schwenkbewegung 33 hervorrufen.

Im Rahmen der Rollenhebel-Schwenkbewegung 33 kann der Rollenhebel 27 zwischen einer aus Figuren 1 bis 3 ersichtlichen Grundstellung und einer in den Figuren 4 bis 6 illustrierten Betätigungsstellung verschwenkt werden. Zur besseren Unterscheidung sei die Bewegungsphase zwischen der Grundstellung und der Betätigungsstellung als Vorwärts-Schwenkbewegung 33a und die entgegengesetzte Bewegungsphase, bei der der Rollenhebel aus der Betätigungsstellung in die Grundstellung zurückgeschwenkt wird, als Rückwärts-Schwenkbewegung 33b bezeichnet.

In der Grundstellung des Rollenhebels 27 nimmt die Ventilgliedanordnung 7 die erste Schaltstellung ein. Dabei ragt der Betätigungsabschnitt 14 weitestmöglich aus dem Ventilgehäuse 5 heraus und der Kraftabgabeabschnitt 37 des Rollenhebels 27 ist in der Achsrichtung der Hochachse 25 maximal vom Ventilgehäuse 5 entfernt.

In der Betätigungsstellung des Rollenhebels 27 nimmt die Ventilgliedanordnung 7 der Ventileinheit 2 die zweite Schaltstellung ein. Der Betätigungsabschnitt 14 ist dabei weitestmöglich in das Ventilgehäuse 5 zurückgeschoben, wobei der Rollenhebel 27 im Bereich seines Kraftabgabeabschnittes 37 maximal an das Ventilgehäuse 5 angenähert ist oder auch am Ventilgehäuse 5 anliegt.

Bei der Vorwärts-Schwenkbewegung 33a drückt der Rollenhebel 27 mit seinem Kraftabgabeabschnitt 37 auf die Stirnfläche 38 des Betätigungsabschnittes 14, sodass dieser verschoben wird und die Ventilgliedanordnung 7 zu der Umschaltbewegung 8 zwischen der ersten Schaltstellung und der zweiten Schaltstellung angetrieben wird. Die Ventilgliedanordnung 7 behält die zweite Schaltstellung bei, solange der Rollenhebel 27 durch das mit ihm zusammenwirkende Betätigungsglied 43 in der Betätigungsstellung gehalten ist.

Bewegt sich das Betätigungsglied 43 außerhalb des Einflussbereiches der Antriebsrolle 42, entfällt die den Rollenhebel 27 in der Richtung der Vorwärts-Schwenkbewegung 33a beaufschlagende Betätigungskraft. Infolgedessen wird der Rollenhebel 27 durch den auf seinen Kraftabgabeabschnitt 37 einwirkenden Betätigungsabschnitt 14 zu der Rückwärts-Schwenkbewegung 33b angetrieben und in die Grundstellung zurückgeschwenkt. Der Betätigungsabschnitt 14 erhält seine Antriebskraft von der Rückstellfedereinrichtung 17.

Bevorzugt enthält der Rollenhebel 27 einen den Lagerabschnitt 34 definierenden Schwenkarm 44, der mittelbar oder unmittelbar die Antriebsrolle 42 trägt. Bei einem nicht gezeigten Ausführungsbeispiel ist die Antriebsrolle 42 direkt an dem Schwenkarm 44 drehbar gelagert.

Eine beim Ausführungsbeispiel vorhandene vorteilhafte Ausführungsform des Rollenhebels ist zweiarmig ausgeführt und verfügt zusätzlich zu dem Schwenkarm 44 über einen Kipparm 45. Der Kipparm 45 ist an dem Schwenkarm 44 um eine Kippachse 46 verschwenkbar gelagert, wobei die Kippachse 46 parallel zu der Schwenkachse 32 verläuft. Die Antriebsrolle 42 ist in diesem Fall drehbar an dem Kipparm 45 gelagert. Eine zwischen dem Kipparm 45 und dem Schwenkarm 44 wirksame Federeinrichtung 47 beaufschlagt den Kipparm 45 ständig in Richtung einer Ausgangsstellung, in der er an einer Anschlagfläche 48 des Schwenkarms 44 anliegt.

Die Anschlagfläche 48 ist derart im Schwenkweg des Kipparms 45 angeordnet, dass der Kipparm 45 an sie angedrückt wird, wenn er durch das Betätigungsglied 43 im Richtungssinn der Vorwärts-Schwenkbewegung 33a beaufschlagt wird. Hat das Betätigungsglied 43 die Antriebsrolle 42 passiert und bewegt sich anschließend wieder in seine Ausgangsposition zurück, kann es über die Antriebsrolle 42 hinweggleiten, ohne ein Verschwenken des Rollenhebels 27 in die Betätigungsstellung zu verursachen. Grund dafür ist, dass der die Antriebsrolle 42 aufweisende Kipparm 45 in diesem Fall entgegen der Rückstellkraft der Federeinrichtung 47 relativ zum Schwenkarm 44 verschwenken kann, ohne dass auf den Schwenkarm 44 ein Drehmoment ausgeübt wird.

Der mindestens eine Kraftabgabeabschnitt 37 ist sowohl bei einarmiger als auch bei zweiarmiger Ausführung des Rollenhebels 27 von einem Abschnitt des Schwenkarms 44 gebildet.

Bevorzugt ist der Schwenkarm 44 im Querschnitt betrachtet U-förmig profiliert. Dies trifft auf das Ausführungsbeispiel zu, wo der Schwenkarm 44 zwei seitliche, in Achsrichtung der Schwenkachse 32 zueinander beabstandete Schwenkarmschenkel 49a, 49b aufweist, die an der Unterseite des Schwenkarms 44 durch einen plattenförmigen Verbindungssteg 52 miteinander verbunden sind. Der Verbindungssteg und die beiden Schwenkarmschenkel 49a, 49b sind zweckmäßigerweise einstückig miteinander ausgebildet und begrenzen gemeinsam einen nach oben offenen Schwenkarm-Innenraum 53.

Der Lagerabschnitt 34 befindet sich an einer Rückseite 54 des Rollenhebels 27 und des zum Rollenhebel 27 gehörenden Schwenkarms 44. Auch an dieser Rückseite 54 ist der Schwenkarm-Innenraum 53 zweckmäßigerweise offen.

Der Schwenkarm 44 taucht derart in den zwischen den beiden Lagerschenkeln 36 definierten Zwischenraum des Lagersockels 22 ein, dass die beiden Schwenkarmschenkel 49a, 49b bevorzugt in zu den Lagerschenkeln 36 parallelen Ebenen verlaufen.

Eine Besonderheit der Rollenhebel-Betätigungseinrichtung 3 besteht darin, dass sie über eine mit Energieabsorptionsmitteln 55 ausgestattete Energieabsorptionseinrichtung 56 verfügt, durch die der Rollenhebel 27 bei seiner Rückwärts-Schwenkbewegung 33b bei Annäherung an seine Grundstellung während einer im Folgenden als Bremsweg bezeichneten Wegstrecke abgebremst wird. Durch die Energieabsorptionseinrichtung 56 wird also die Geschwindigkeit des in die Grundstellung zurückschwenkenden Rollenhebels 27 schon vor dem Erreichen der Grundstellung verringert, sodass hohe Stoßbelastungen vermieden werden. Die Verschleißanfälligkeit der Rollenhebel-Betätigungseinrichtung 3 ist daher erheblich reduziert.

Es besteht die Möglichkeit, die Rollenhebel-Betätigungseinrichtung 3 zusätzlich zu den Energieabsorptionsmitteln 55 mit unnachgiebigen Endanschlagmitteln auszustatten, die die Grundstellung des Rollenhebels 27 vorgeben. In diesem Fall sind die Energieabsorptionsmittel 55 bei der Rückwärts-Schwenkbewegung 33b des Rollenhebels 27 wirksam, bevor der Rollenhebel 27 an den Endanschlagmitteln zur Anlage gelangt. Die Endanschlagmittel sind in diesem Fall ortsfest am Lagersockel 22 angeordnet.

Es besteht aber auch die vorteilhafte Möglichkeit, auf zusätzlich zu den Energieabsorptionsmitteln 55 vorhandene Endanschlagmittel zu verzichten. Dies insbesondere dann, wenn die Energieabsorptionsmittel 55 eine ausreichend hohe Steifigkeit haben, um nicht nur eine Energieabsorption vorzunehmen, sondern auch die Grundstellung des Rollenhebels 27 vorzugeben, nachdem ein gewisser Anteil der Bewegungsenergie des Rollenhebels 27 absorbiert worden ist. In diesem Sinne ist das in der Zeichnung illustrierte Ausführungsbeispiel konzipiert.

Die Energieabsorptionsmittel 55 sind zweckmäßigerweise am Lagersockel 22 der Rollenhebel-Betätigungseinrichtung 3 angeordnet. Bei einem nicht gezeigten Ausführungsbeispiel bestehen die Energieabsorptionsmittel 55 aus einem pneumatischen oder hydraulischen Stoßdämpfer. Als optimaler Kompromiss zwischen Steifigkeit und Dämpfungsverhalten wird allerdings eine Realisierung der Energieabsorptionsmittel 55 als reine Federmittel 57 angesehen, wie es beim Ausführungsbeispiel der Fall ist. Dabei sind die Federmittel 57 bevorzugt so ausgelegt, dass ihr während der Energieabsorption wirksamer Federweg relativ gering ist. Beispielsweise beträgt der Federweg, der gleichzeitig den Bremsweg repräsentiert, maximal 1 mm.

Bevorzugte Federmittel 57 der Energieabsorptionseinrichtung 56 bestehen aus einer Blattfeder 58. Beim Ausführungsbeispiel ist dies der Fall.

Die Blattfeder 58 hat eine Längserstreckung, wobei sie sich zweckmäßigerweise in der Schwenkebene des Rollenhebels 27 erstreckt, sodass sie die in Achsrichtung der Schwenkachse 32 gemessene Baubreite des Rollenhebelventils 1 nicht vergrößert. Bevorzugt ist die Blattfeder 58 schmäler als der Schwenkarm-Innenraum 53.

Besonders zweckmäßig ist es, wenn die Blattfeder 58 gemäß dem Ausführungsbeispiel über einen gebogenen Längsverlauf verfügt. Sie hat einen ersten axialen Endabschnitt 59, über den sie bezogen auf die Hochachse 25 unterhalb des Rollenhebels 27 an dem Lagersockel 22 befestigt ist. Man kann auch sagen, dass die eine streifenförmige Gestalt aufweisende Blattfeder 58 zweckmäßigerweise eine einstückige Verlängerung des Basisabschnittes 23 darstellt.

Ausgehend von dem ersten Endabschnitt 59 erstreckt sich die Blattfeder 58 zunächst von der Hochachse 25 weg, um sich anschließend mit einem Bogenabschnitt 63 nach oben und um den Lagerabschnitt 34 des Rollenhebels 27 herum zu erstrecken. Mit einem sich an den Bogenabschnitt 63 anschließenden weiteren Längenabschnitt 64 erstreckt sich die Blattfeder 58 oberhalb des Schwenkarms 44 des Rollenhebels 27, also auf der der Ventileinheit 2 abgewandten Seite des Schwenkarms 44, wieder zurück in Richtung zu der Hochachse 25. Dieser weitere Längenabschnitt 64 endet oberhalb des Schwenkarms 44 mit einem zweiten axialen Endabschnitt 62 der Blattfeder 58. Die Konkave Seite der gebogenen Blattfeder 58 ist dem Rollenhebel 22 zugewandt.

Die um den Lagerabschnitt 34 herumgeführte Blattfeder 58 taucht mit ihrem weiteren Längenabschnitt 64 zweckmäßigerweise in den Schwenkarm-Innenraum 53 ein und kooperiert darin mittels ihres Krafteinleitungsabschnittes 65 mit der Oberseite des Verbindungssteges 52. Die gebogene Blattfeder 58 erstreckt sich an der der Hochachse 25 abgewandten Seite um die Schwenkachse 32 und den gegebenenfalls vorhandenen Achsbolzen 35 herum.

Der zweite Endabschnitt 62 liegt im Schwenkweg des Schwenkarms 44, wobei er beim Ausführungsbeispiel im Schwenkweg des Verbindungssteges 52 liegt. Der zweite Endabschnitt 62 definiert einen Krafteinleitungsabschnitt 65 der Blattfeder 58, auf den der Schwenkarm 44 bei der Rückwärts-Schwenkbewegung 33b auftrifft und an dem die zu absorbierende Bewegungsenergie des Rollenhebels 27 in die Blattfeder 58 eingeleitet wird.

Bevorzugt kooperiert der Krafteinleitungsabschnitt 65 mit demjenigen Abschnitt des Schwenkarms 44, der auch den mit dem Betätigungsabschnitt 14 zusammenwirkenden Kraftabgabeabschnitt 37 bildet.

Bei der Rückwärts-Schwenkbewegung 33b des Rollenhebels 27 beginnt der mit einer Energieabsorption verbundene Bremsweg mit dem Aufprall des Rollenhebels 27 auf den Krafteinleitungsabschnitt 65 der Blattfeder 58. Dies gilt zweckmäßigerweise auch für Bauformen, bei denen die Energieabsorptionsmittel 55 nicht als Blattfeder 58 realisiert sind, da es auch in diesem Fall vorteilhaft ist, wenn die Energieabsorptionsmittel 55 einen im Schwenkweg des Rollenhebels 27 angeordneten beweglichen Krafteinleitungsabschnitt 65 haben.

Wenn der Rollenhebel 27 die Betätigungsstellung einnimmt, ist er in seiner Schwenkrichtung mit Abstand zu dem Krafteinleitungsabschnitt 65 angeordnet. In der ersten Phase der Rückwärts-Schwenkbewegung 33b ist die Energieabsorptionseinrichtung 56 folglich noch unwirksam, was ein rasches Zurückschalten der Ventileinheit 2 in die erste Schaltstellung begünstigt. Erst kurz vor Erreichen der Grundstellung prallt der Rollenhebel 27 auf den Krafteinleitungsabschnitt 65 auf und wird dadurch abgebremst.

Die Rückstellfedereinrichtung 17 der Ventileinheit 2 ist zweckmäßigerweise stark genug, um den Rollenhebel 27 in der Grundstellung zu fixieren, wobei der Krafteinleitungsabschnitt 65 unter Verformung der Blattfeder 58 um das Maß des Bremsweges ausgelenkt ist, solange das Betätigungsglied 43 nicht auf die Antriebsrolle 43 einwirkt. Zu Beginn der Vorwärts-Schwenkbewegung 33a folgt daher der Krafteinleitungsabschnitt 65 zunächst noch um eine dem Bremsweg entsprechende Wegstrecke dem Rollenhebel 27 nach.

Alternativ ist auch eine dahingehende Auslegung der Energieabsorptionseinrichtung 56 möglich, dass der Rollenhebel 27 nur bei der Rückwärts-Schwenkbewegung 33b zum Ende des Bremsweges kurzzeitig die Grundstellung einnimmt und dann wieder ein Stückweit durch die Federmittel 57 zurückgedrückt wird, bis sich der Krafteinleitungsabschnitt 65 in der Ausgangsstellung befindet, die er im unverformten Zustand der Blattfeder 58 einnimmt. Die von dem Betätigungsglied 43 initiierte Vorwärts-Schwenkbewegung 33a beginnt dann im bereits geringfügig aus der Grundstellung heraus verschwenkten Zustand des Rollenhebels 27.

## Patentansprüche

1. Rollenhebel-Betätigungseinrichtung für Rollenhebelventile, mit einem zur Fixierung an einer Ventileinheit (2) eines Rollenhebelventils (1) dienenden Lagersockel (22) und einem an dem Lagersockel (22) bezüglich einer Schwenkachse (32) verschwenkbar gelagerten, eine Antriebsrolle (42) aufweisenden Rollenhebel (27), wobei der Rollenhebel (27) im Rahmen einer Vorwärts-Schwenkbewegung (33a) aus einer Grundstellung in eine Betätigungsstellung und im Rahmen einer Rückwärts-Schwenkbewegung (33b) aus der Betätigungsstellung zurück in die Grundstellung verschwenkbar ist, wobei der Rollenhebel (27) mindestens einen zu der Schwenkachse (32) beabstandeten Kraftabgabeabschnitt (37) aufweist, der vorgesehen ist, um bei der Vorwärts-Schwenkbewegung (33a) drückend auf einen einer zu betätigenden Ventilgliedanordnung (7) eines Rollenhebelventils (1) zugeordneten Betätigungsabschnitt (14) einzuwirken, **dadurch gekennzeichnet, dass** die Rollenhebel-Betätigungseinrichtung (3) eine mit Energieabsorptionsmitteln (55) ausgestattete Energieabsorptionseinrichtung (56) aufweist, durch die der die Rückwärts-Schwenkbewegung (33b) ausführende Rollenhebel (27) bei Annäherung an seine Grundstellung entlang eines Bremsweges abgebremst wird.

2. Rollenhebel-Betätigungseinrichtung nach Anspruch 1, **dadurch gekennzeichnet, dass** die Energieabsorptionsmittel (55) der Energieabsorptionseinrichtung (56) an dem Lagersockel (22) angeordnet sind.

3. Rollenhebel-Betätigungseinrichtung nach Anspruch 2, **dadurch gekennzeichnet, dass** die Energieabsorptionsmittel (55) einen im Schwenkweg des Rollenhebels (27) angeordneten beweglichen Krafteinleitungsabschnitt (65) aufweisen, zu dem der Rollenhebel (27) in der Betätigungsstellung beabstandet ist und auf den der Rollenhebel (27) bei seiner Rückwärts-Schwenkbewegung (33b) auftrifft, bevor er die Grundstellung erreicht.

4. Rollenhebel-Betätigungseinrichtung nach Anspruch 3, **dadurch gekennzeichnet, dass** der Krafteinleitungsabschnitt (65) von einem frei endenden Endabschnitt (62) der Energieabsorptionsmittel (55) gebildet ist.

5. Rollenhebel-Betätigungseinrichtung nach einem der Ansprüche 1 bis 4, **dadurch gekennzeichnet, dass** die Energieabsorptionsmittel (55) von Federmitteln (57) gebildet sind.

6. Rollenhebel-Betätigungseinrichtung nach Anspruch 5, **dadurch gekennzeichnet, dass** die Federmittel (57) mindestens eine Blattfeder (58) enthalten, die sich zweckmäßigerweise in der Schwenkebene des Rollenhebels (27) erstreckt.

7. Rollenhebel-Betätigungseinrichtung nach Anspruch 6, **dadurch gekennzeichnet, dass** die Blattfeder (58) einen gebogenen Längsverlauf hat, wobei sie über einen mit dem Lagersockel (22) verbundenen ersten Endabschnitt (59) und einen diesbezüglich entgegengesetzten, mit dem Rollenhebel (27) zusammenwirkenden zweiten Endabschnitt (62) verfügt.

8. Rollenhebel-Betätigungseinrichtung nach Anspruch 7, **dadurch gekennzeichnet, dass** der Rollenhebel (27) an einem Endbereich einen Lagerabschnitt (34) aufweist, mit dem er schwenkbeweglich an dem Lagersockel (22) gelagert ist, wobei sich die Blattfeder (58) in der Schwenkebene des Rollenhebels (27) in gebogener Form um den Lagerabschnitt (34) und die Schwenkachse (32) herum erstreckt.

9. Rollenhebel-Betätigungseinrichtung nach Anspruch 8, **dadurch gekennzeichnet, dass** die Blattfeder (58) einenends unterhalb des Rollenhebels (27) am Lagersockel (22) befestigt ist und oberhalb des Rollenhebels (27) mit einem zur Energieabsorption von dem Rollenhebel (27) beaufschlagbaren Krafteinleitungsabschnitt (65) endet.

10. Rollenhebel-Betätigungseinrichtung nach Anspruch 9, **dadurch gekennzeichnet, dass** der Lagersockel (22) einen sich unterhalb des Rollenhebels (27) befindenden starren Basisabschnitt (23) aufweist, von dem nach oben hin wenigstens ein Lagerschenkel (36) wegragt, an dem der Rollenhebel (27) mit seinem Lagerabschnitt (34) verschwenkbar gelagert ist, wobei die Blattfeder (58) mit dem einen ihrer beiden axialen Endabschnitte (59) an dem Basisabschnitt (23) befestigt ist und mit dem anderen ihrer beiden axialen Endabschnitte (62) unter Bildung eines zur Energieabsorption durch den Rollenhebel (27) beaufschlagbaren Krafteinleitungsabschnittes (65) über den Rollenhebel (27) ragt.

11. Rollenhebel-Betätigungseinrichtung nach einem der Ansprüche 1 bis 10, **dadurch gekennzeichnet, dass** die Energieabsorptionsmittel (55) einstückig mit dem Lagersockel (22) ausgebildet sind.

12. Rollenhebel-Betätigungseinrichtung nach einem der Ansprüche 1 bis 11, **dadurch gekennzeichnet, dass** der Rollenhebel (27) einen die Antriebsrolle (42) tragenden Schwenkarm (44) aufweist, der mittels die Schwenkachse (32) vorgebenden Schwenklagermitteln (28) verschwenkbar an dem Lagersockel (22) gelagert ist und an dem der mindestens eine zu der Schwenkachse (32) beabstandete Kraftabgabeabschnitt (37) angeordnet ist.

13. Rollenhebel-Betätigungseinrichtung nach Anspruch 12, **dadurch gekennzeichnet, dass** die Antriebsrolle (42) an einem schwenkbeweglich an dem Schwenkarm (44) gelagerten Kipparm (45) des Rollenhebels (27) angeordnet ist, wobei der Kipparm (45) zweckmäßigerweise federnd in eine bezüglich des Schwenkarmes (44) eingenommene Grundstellung vorgespannt ist.

14. Rollenhebelventil, **dadurch gekennzeichnet, dass** es mit einer Rollenhebel-Betätigungseinrichtung (3) nach einem der Ansprüche 1 bis 13 ausgestattet ist.

15. Rollenhebelventil nach Anspruch 14, **dadurch gekennzeichnet, dass** das Rollenhebelventil (1) eine Ventileinheit (2) mit einem Ventilgehäuse (5) und einer bezüglich des Ventilgehäuse (5) zwischen verschiedenen Schaltstellungen umschaltbaren Ventilgliedanordnung (7) aufweist, wobei die Rollenhebel-Betätigungseinrichtung (3) mit ihrem Lagersockel (22) außen an dem Ventilgehäuse (5) angeordnet ist und der Kraftabgabeabschnitt (37) des Rollenhebels (27) in einem außerhalb des Ventilgehäuses (5) liegenden Arbeitsbereich (18) zur Ausübung einer Umschaltkraft an einem bezüglich des Ventilgehäuses (5) beweglichen Betätigungsabschnitt (14) der Ventileinheit (2) anliegt, der antriebsmäßig mit der Ventilgliedanordnung (7) zusammenwirkt oder unmittelbar ein Bestandteil der Ventilgliedanordnung (7) ist.

## Claims

1. Roller lever actuating device for roller lever valves, with a bearing pedestal (22) for attaching to a valve unit (2) of a roller lever valve (1) and with a roller lever (27) pivotably mounted on the bearing pedestal (22) relative to a pivot axis (23) and having a drive roller (23), wherein the roller lever (27) is pivotable from a base position into a actuating position within a forward pivoting movement (33a) and from the actuating position back into the base position within a backward pivoting movement (33b), wherein the roller lever (27) has at least one force output section (37) located at a distance from the pivot axis (23) and provided for acting in a pressing manner on an actuating section (14) assigned to a valve member assembly (7) of a roller lever valve (1) to be actuated in the forward pivoting movement (33a), **characterised in that** the roller lever actuating device (3) comprises an energy absorption device (56), which is equipped with energy absorption means (55) and by which the roller lever (27) performing the backward pivoting movement (33b) is decelerated along a braking path when approaching its base position.

2. Roller lever actuating device according to claim 1, **characterised in that** the energy absorption means (55) of the energy absorption device (56) are located on the bearing pedestal (22).

3. Roller lever actuating device according to claim 2, **characterised in that** the energy absorption means (55) comprise a movable force introduction section (65), which is located in the pivoting path of the roller lever (27), from which the roller lever (27) is spaced in the actuating position and which the roller lever (27) impacts on in its backward pivoting movement (33b) before reaching the base position.

4. Roller lever actuating device according to claim 3, **characterised in that** the force introduction section (65) is represented by a freely ending end section (62) of the energy absorption means (55).

5. Roller lever actuating device according to any of claims 1 to 4, **characterised in that** the energy absorption means (55) are represented by spring means (57).

6. Roller lever actuating device according to claim 5, **characterised in that** the spring means (57) comprise at least one leaf spring (58), which expediently extends in the pivoting plane of the roller lever (27).

7. Roller lever actuating device according to claim 6, **characterised in that** the leaf spring (58) has a curved longitudinal dimension, having a first end section (59) connected to the bearing pedestal (22) and an opposite second end section (62) acting together with the roller lever (27).

8. Roller lever actuating device according to claim 7, **characterised in that** the roller lever (27) has a bearing section (34), with which is pivotably mounted on the bearing pedestal (22), in one end region, wherein the leaf spring (58) extends in a curved form in the pivoting plane of the roller lever (27) around the bearing section (34) and the pivoting axis (32).

9. Roller lever actuating device according to claim 8, **characterised in that** the leaf spring (58) is at one end secured to the bearing pedestal (22) below the roller lever (27) and ends above the roller lever (27) with a force introduction section (65), to which pressure can be applied by the roller lever (27) for energy absorption.

10. Roller lever actuating device according to claim 9, **characterised in that** the bearing pedestal (22) has a rigid base section (23), which is located below the roller lever (27) and from which at least one bearing leg (36), on which the roller lever (27) is pivotably mounted with its bearing section (34), projects upwards, wherein the leaf spring (58) is secured to the base section (23) with one of its two axial end sections (59) and projects with the other of its two axial end sections (62) beyond the roller lever (27) to form a force introduction section (65), to which pressure can be applied by the roller lever (27) for energy absorption.

11. Roller lever actuating device according to any of claims 1 to 10, **characterised in that** the energy absorption means (55) are formed integrally with the bearing pedestal (22).

12. Roller lever actuating device according to any of claims 1 to 11, **characterised in that** the roller lever (27) has a swivel arm (44), which carries the drive roller (42) and is pivotably mounted on the bearing pedestal (22) by means of pivot bearing means (28) predetermining the pivot axis (32) and on which the at least one force output section (37) spaced from the pivot axis (32) is located.

13. Roller lever actuating device according to claim 12, **characterised in that** the drive roller (42) is located on a tilting arm (45) of the roller lever (27), which is pivotably mounted on the swivel arm (44), wherein the tilting arm (45) is expediently preloaded resiliently towards a base position adopted relative to the swivel arm (44).

14. Roller lever valve, **characterised in that** it is equipped with a roller lever actuating device (3) according to any of claims 1 to 13.

15. Roller lever valve according to claim 14, **characterised in that** the roller lever valve (1) has a valve unit (2) with a valve housing (5) and a valve member assembly (7) switchable between different switching positions relative to the valve housing (5), wherein the roller lever actuating device (3) is located on the outside of the valve housing (5) with its bearing pedestal (22) and the force output section (37) of the roller lever (27) bears, for applying a switch-over force, in a working region (18) located outside the valve housing (5) against an actuating section (14) of the valve unit (2), which is movable relative to the valve housing (5) and, for drive purposes, acts together with the valve member assembly (7) or directly is a part of the valve member assembly (7).

## Revendications

1. Dispositif d'actionnement à levier à galet pour des soupapes à levier à galet, avec un socle de support (22) destiné à être fixé au niveau d'une unité de soupape (2) d'une soupape à levier à galet (1) et un levier à galet (27) monté de manière à pouvoir pivoter par rapport à un axe de pivotement (32) au niveau du socle de support (22), présentant un galet d'entraînement (42), dans lequel le levier à galet (27) peut être pivoté dans le cadre d'un mouvement de pivotement vers l'avant (33a) depuis une position de base dans une position d'actionnement et dans le cadre d'un mouvement de pivotement vers l'arrière (33b) depuis la position d'actionnement pour revenir dans la position de base, dans lequel le levier à galet (27) présente au moins une section de production de force (37) tenue à distance par rapport à l'axe de pivotement (32), qui est prévue pour agir par pression, lors du mouvement de pivotement vers l'avant (33a), sur une section d'actionnement (14) associée à un ensemble organe de soupape (7) à actionner d'une soupape à levier à galet (1), **caractérisé en ce que** le dispositif d'actionnement à levier à galet (3) présente un dispositif d'absorption d'énergie (56) équipé de moyens d'absorption d'énergie (55), par lequel le levier à galet (27) exécutant le mouvement de pivotement vers l'arrière (33b) est freiné à l'approche de sa position de base le long d'un trajet de freinage.

2. Dispositif d'actionnement à levier à galet selon la revendication 1, **caractérisé en ce que** les moyens d'absorption d'énergie (55) du dispositif d'absorption d'énergie (56) sont disposés au niveau du socle de support (22).

3. Dispositif d'actionnement à levier à galet selon la revendication 2, **caractérisé en ce que** les moyens d'absorption d'énergie (55) présentent une section d'introduction de force (65) mobile disposée sur le trajet de pivotement du levier à galet (27), par rapport à laquelle le levier à galet (27) est tenu à distance dans la position d'actionnement et sur laquelle le levier à galet (27) vient heurter lors de son mouvement de pivotement vers l'arrière (33b) avant qu'il n'atteigne sa position de base.

4. Dispositif d'actionnement à levier à galet selon la revendication 3, **caractérisé en ce que** la section d'introduction de force (65) est formée par une section d'extrémité (62) se terminant librement des moyens d'absorption d'énergie (55).

5. Dispositif d'actionnement à levier à galet selon l'une quelconque des revendications 1 à 4, **caractérisé en ce que** les moyens d'absorption d'énergie (55) sont formés par des moyens de ressort (57).

6. Dispositif d'actionnement à levier à galet selon la revendication 5, **caractérisé en ce que** les moyens de ressort (57) contiennent au moins un ressort à lames (58), qui s'étend de manière appropriée dans le plan de pivotement du levier à galet (27).

7. Dispositif d'actionnement à levier à galet selon la revendication 6, **caractérisé en ce que** le ressort à lames (58) a un profil longitudinal cintré, dans lequel il dispose d'une première section d'extrémité (59) reliée au socle de montage (22) et d'une deuxième section d'extrémité (62) opposée à cette dernière, coopérant avec le levier à galet (27).

8. Dispositif d'actionnement à levier à galet selon la revendication 7, **caractérisé en ce que** le levier à galet (27) présente au niveau d'une zone d'extrémité une section de support (34), par laquelle il est monté de manière mobile par pivotement au niveau du socle de support (22), dans lequel le ressort à lames (58) s'étend, dans le plan de pivotement du levier à galet (27), sous une forme cintrée, tout autour de la section de support (34) et de l'axe de pivotement (32).

9. Dispositif d'actionnement à levier à galet selon la revendication 8, **caractérisé en ce que** le ressort à lames (58) est fixé côté d'une extrémité sous le levier à galet (27) au niveau du socle de support (22) et se termine au-dessus du levier à galet (27) avec une section d'introduction de force (65) pouvant être sollicitée par le levier à galet (27) aux fins de l'absorption d'énergie.

10. Dispositif d'actionnement à levier à galet selon la revendication 9, **caractérisé en ce que** le socle de support (22) présente une section de base (23) rigide se trouvant sous le levier à galet (27), de laquelle au moins une branche de support (36) dépasse en s'éloignant vers le haut, au niveau de laquelle le levier à galet (27) est monté de manière à pouvoir pivoter par sa section de support (34), dans lequel le ressort à lames (58) est fixé au niveau de la section de base (23) par une de ses deux sections d'extrémité (59) axiales et dépasse par l'autre de ses deux sections d'extrémité (62) axiales du levier à galet (27) en formant une section d'introduction de force (65) pouvant être sollicitée par le levier à galet (27) aux fins de l'absorption d'énergie.

11. Dispositif d'actionnement à levier à galet selon l'une quelconque des revendications 1 à 10, **caractérisé en ce que** les moyens d'absorption d'énergie (55) sont réalisés d'un seul tenant avec le socle de support (22).

12. Dispositif d'actionnement à levier à galet selon l'une quelconque des revendications 1 à 11, **caractérisé en ce que** le levier à galet (27) présente un bras pivotant (44) supportant le galet d'entraînement (42), qui est monté au niveau du socle de support (22) de manière à pouvoir pivoter au moyen de moyens de palier de pivotement (28) prédéfinissant l'axe de pivotement (32) et au niveau duquel l'au moins une section de production de force (37) tenue à distance par rapport à l'axe de pivotement (32) est disposée.

13. Dispositif d'actionnement à levier à galet selon la revendication 12, **caractérisé en ce que** le galet d'entraînement (42) est disposé au niveau d'un bras basculant (45), monté de manière mobile par pivotement au niveau du bras pivotant (44), du levier à galet (27), dans lequel le bras basculant (45) est précontraint de manière appropriée sur ressort dans une position de base adoptée par rapport au bras pivotant (44).

14. Soupape à levier à galet, **caractérisée en ce qu'**elle est équipée d'un dispositif d'actionnement à levier à galet (3) selon l'une quelconque des revendications 1 à 13.

15. Soupape à levier à galet selon la revendication 14, **caractérisée en ce que** la soupape à levier à galet (1) présente une unité de soupape (2) avec un carter de soupape (5) et un ensemble organe de soupape (7) pouvant être commuté par rapport au carter de soupape (5) entre différentes positions de commutation, dans laquelle le dispositif d'actionnement à levier à galet (3) est disposé par son socle de support (22) à l'extérieur au niveau du carter de soupape (5) et la section de production de force (37) du levier à galet (27) repose dans une zone de travail (18) située à l'extérieur du carter de soupape (5) pour exercer une force de commutation au niveau d'une section d'actionnement (14), mobile par rapport au carter de soupape (5), de l'unité de soupape (2), qui coopère en entraînement avec l'ensemble organe de soupape (7) ou fait directement partie intégrante de l'ensemble organe de soupape (7).
